# EUROPEAN PATENT SPECIFICATION

(11) **EP 4 394 128 B1**
(45) Date of publication and mention of the grant of the patent: **09.12.2026**
(21) Application number: 23217900.2
(22) Date of filing: 19.12.2023
(51) Int. Cl.: E01C 19/20, E01H 5/06, E01H 10/00, E01C 19/15, E01C 23/082

(54) **METHOD AND CONTROL SYSTEM FOR CONTROLLING OPERATIONS OF ROAD MAINTENANCE VEHICLE**
VERFAHREN UND STEUERUNGSSYSTEM ZUR STEUERUNG DES BETRIEBS EINES STRASSENINSTANDHALTUNGSFAHRZEUGS
PROCÉDÉ ET SYSTÈME DE COMMANDE DES OPÉRATIONS D'UN VÉHICULE DE MAINTENANCE DE ROUTE

(30) Priority: 28.12.2022 FI 20226169
(43) Date of publication of application: 03.07.2024
(73) Proprietor: Pajakulma Oy, 33840 Tampere (FI)
(72) Inventor: Kulku, Mika, 33840 Tampere (FI); Joenniemi, Joni, 33840 Tampere (FI)
(74) Representative: Kolster Oy Ab

(56) References cited:
- US-A1- 2008 127 530
- US-A1- 2017 066 324
- US-B1- 6 446 879
- US-B2- 9 845 008

## Description

### Background of the invention

The invention relates to road maintenance vehicles and particularly to controlling the operations of road maintenance vehicles.

A road maintenance vehicle tries to work the surface to be worked as effectively and carefully as possible. Typically, the road maintenance vehicle includes several controllable parts and actuators. Therefore, the control of the operations of the road maintenance vehicle is typically quite complex and demanding. Document US 2017/066324 A1 discloses a system and a method of reacting to wheel slip in a traction vehicle.

### Brief description of the invention

The object of the invention is thus to develop a new kind of method and control system for controlling operations of a road maintenance vehicle. The solution according to the invention is characterised by what is disclosed in the independent claims. Some embodiments of the invention are disclosed in the dependent claims.

In the disclosed solution, slipping of a driving wheel of the road maintenance vehicle is monitored in relation to the surface being worked. When it is observed that a driving wheel slips, the observation of the slipping of the driving wheel is conveyed to a control system controlling the operations of the road maintenance vehicle. As a response to the observation on the slipping of the driving wheel, the control system controlling the operations of the road maintenance vehicle controls a road maintenance actuator. In this way, the actuators of the road maintenance vehicle may be controlled in a versatile and managed way.

As a response to the observation on the slipping of the driving wheel, the control system controlling the operations of the road maintenance vehicle decreases the slowing effect of a blade or plough of the road maintenance vehicle to the motion of the road maintenance vehicle. Hence, it is possible to decrease the slipping of the driving wheel and to improve the movement and control of movement of the road maintenance vehicle in a simple and effective way.

The slowing effect of the blade or plough of the road maintenance vehicle to the motion of the road maintenance vehicle is decreased by adjusting pressing force of the blade or plough. As the pressing force of the blade or plough is controlled when the driving wheel is slipping, it then means that pressure applied by the blade or plough plate, and thus the blade or plough, to the surface being worked is decreased in order to be able to stop the wheel from slipping and to restore the vehicle's motion forward. The blade or plough plate remains the whole time against the surface being worked but it removes less material due to the decreased work pressure. The work result remains uniform because the position of the blade or plough is not changed during working but the work force is decreased until the grip of the vehicle is restored. After this, it is again possible to increase the work pressure automatically until a limit value is reached. This work cycle may continue automatically and smoothly, whereby the ploughing result is even. All in all, the blade or plough may be controlled smoothly and accurately.

According to an embodiment, the blade or plough of the road maintenance vehicle has a specific set angle work position. When decreasing the slowing effect of the blade or plough of the road maintenance vehicle to the motion of the road maintenance vehicle, the blade or plough is deflected from the set work position. Furthermore, as a response to the end of the driving wheel slipping, the control system controlling the operations of the road maintenance vehicle controls the blade or plough of the road maintenance vehicle towards the set work position. Then, it is possible to use the road maintenance vehicle as much as possible with desired actuator settings. When observing slipping, the position of the blade or plough is not e.g. reduced too much and/or for too long a time, but it is possible to maintain the blade or plough in the desired position as much as possible or at least as close to it as possible. For example, when removing packed snow, the blade or plough may be used as effectively as possible from the viewpoint of removal.

According to an embodiment, the observation of the slipping of the driving wheel is conveyed to a control system controlling the operations of the road maintenance vehicle as bus data from the electronic control unit of the road maintenance vehicle. The electronic control unit of the road maintenance vehicle is able to control the operations of the road maintenance vehicle in a versatile way. Based on information on the slipping of a driving wheel formed in the electronic control unit, it is e.g. possible to decrease the drive of the wheel, whereby it is possible to avoid wheel spin. When this same information of the slipping of a driving wheel already in the electronic control unit is conveyed as bus data to the control system controlling the operations of the road maintenance vehicle, the implementation of the control of the operations of the road maintenance vehicle is then easy to realise.

According to an embodiment, the controllable blade or plough of the road maintenance vehicle is at least a lower blade of the road maintenance vehicle. The use of the lower blade typically affects quite a lot to the grip of the wheels, whereby the adjustment of the lower blade may provide a distinct and efficient effect on the operation of the road maintenance vehicle.

According to an embodiment, as a response to the observation on the slipping of the driving wheel, the control system controlling the operations of the road maintenance vehicle adjusts scattering amount of a scatterer. Then, it is possible to scatter a desired amount of antiskid material all the time. For example, when the wheels of the road maintenance vehicle spin, it is possible to prevent the scattering of too much antiskid material in one place.

According to an embodiment, the road maintenance vehicle is a lorry provided with road maintenance actuators. In such a road maintenance vehicle, the disclosed solution is very useful and efficient.

### Brief description of the drawings

The invention will now be described in closer detail in connection with some embodiments and with reference to the accompanying drawings, in which:
Figure 1 is a schematic top view of a road maintenance vehicle; and
Figure 2 is a block diagram of controlling the operations of a road maintenance vehicle.

### Detailed description of the invention

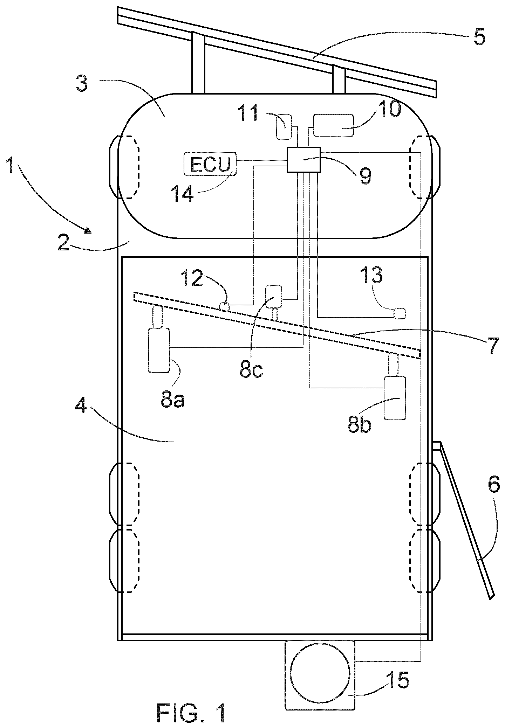

In this connection, the road maintenance vehicle may be a road maintenance lorry as shown in Figure 1. Furthermore, the road maintenance vehicle may be a tractor or a motor grader or some other suitable road maintenance vehicle. The road maintenance vehicle may be used for instance for ploughing snow, slush or ice or for levelling out gravel roads or other areas with gravel or sand surfaces.

The road maintenance vehicle is a commercial vehicle which may take care of several work tasks. Examples of these work tasks are transporting gravel, ploughing snow, spreading sand on roads, removing sand, and repairing road surfaces. For performing the work tasks, the road maintenance vehicle may include several, typically hydraulic, controllable road maintenance actuators. Examples of such actuators are a front plough, a side plough, a lower blade, a bed, and a scatterer.

The road maintenance vehicle of Figure 1 is thus a road maintenance lorry 1 provided with road maintenance actuators. The road maintenance lorry 1 is typically constructed of the basic structure of a lorry and it may include e.g. a frame 2 and a cab 3 as well as a load space, such as a bed 4, and/or some other actuator related to the work of the vehicle, such as a lifter or a mobile container device or some other equivalent. Furthermore, the road maintenance lorry 1 typically includes hydraulic road maintenance actuators, such as a front plough 5, a side plough 6, a lower blade 7, and a scatterer 15. The lower blade 7 in the lower section of the road maintenance lorry 1 is shown by a dashed line in Figure 1. In connection with the front plough 5, it is possible to arrange an extra plough. The extra plough may be e.g. a slush blade which is enabled e.g. when ploughing slush snow.

The bed 4 may typically be lifted up, i.e. there is a tipping device in connection with it. Furthermore, there is typically a tailgate, which may be controlled open and closed, in connection with the bed 4. The scatterer 15 may be e.g. an automatic scatterer or a roll scatterer. The scatterer 15 scatters antiskid material, such as sand, gravel, salt, mixture of sand and salt, or some other equivalent antiskid material.

In connection with the road maintenance lorry 1, there may also be other road maintenance actuators, such as a brush. Furthermore, there may be more than one of specific road maintenance actuators, such as scatterers, and, additionally, there may be other road maintenance actuators than those mentioned in this connection. For clarity, all possible road maintenance actuators are not shown in Figure 1.

In connection with each road maintenance actuator, there are one or more drive actuators for moving the road maintenance actuator. The drive actuator may be e.g. a hydraulic cylinder or an electric actuator, such as a linear motor, or an electric or hydraulic motor providing rotating motion or some other equivalent actuator. In connection with the lower blade 7, Figure 1 shows three drive actuators 8a-8c. The drive actuators 8a and 8b may be tilt cylinders and the drive actuator 8c may be a press cylinder. For clarity, drive actuators in connection with other road maintenance actuators are not shown in Figure 1.

By means of the drive actuators 8a-8c of the lower blade 7, it is possible to adjust the height position of the lower blade 7 and the pressing force of the lower blade, i.e. the force by which the lower blade 7 affects the surface being ploughed. Furthermore, by means of the drive actuators 8a-8c, it is possible to adjust e.g. the tilt of the lower blade 7, the blade angle of the lower blade 7 and/or the delivery angle of the lower blade 7 and/or some other aspect related to the use and operation of the lower blade 7. In connection with other road maintenance actuators, it is also possible to be able to adjust the operation of the road maintenance actuators by adjusting their drive actuators.

The road maintenance vehicle further includes a control unit 9 of road maintenance actuators. The control unit 9 of the road maintenance actuators sends control commands to the drive actuators. Hence, the control unit 9 of the road maintenance actuators enables the control of the road maintenance actuators in a desired way.

In Figure 1, the scatterer 15 is also connected to the control unit 9 of the road maintenance actuators, whereby the same control unit 9 may be used for controlling all the drive actuators of the road maintenance actuators. On the other hand, there may be more than one control unit of road maintenance actuators. For example, there may be a dedicated control unit for the scatterer or scatterers. When adjusting the scatterer 15, the scattering amount of the scatterer, i.e., the amount of antiskid material scattered by the scatterer is adjusted. The adjustment of the scattering amount may occur by adjusting the speed of the conveyor, or in case of a roll scatterer, its scattering roll. Furthermore, the adjustment of the scattering amount may be implemented, in addition to or instead of said adjustment of speed, by adjusting the size of the delivery opening of the scatterer. The adjustment of the scattering amount may be dependent on the speed of the road maintenance vehicle, whereby e.g. when the vehicle speed increases, the scattering amount of the scatterer is increased and, correspondingly, when the vehicle speed decreases, the scattering amount is decreased.

It is possible to connect a display 10 and one or more controllers 11 to the control unit 9 of the road maintenance actuators. There is no necessity to have the display 10 at all or there may be more than one display 10. The controller 11 may be e.g. a control stick or a keyboard. Furthermore, the display 10 may be a touch screen, whereby a controller is also connected to it.

By means of the controller 11 or the display 10, the user of the road maintenance vehicle may enter control commands to the control unit 9 of the road maintenance actuators. Hence, the user of the road maintenance vehicle is able to control the road maintenance actuators in a desired way.

The road maintenance vehicle may include sensors which monitor e.g. the position of the road maintenance actuators. For example, there may be one or more lower-blade sensors 12 in connection with the lower blade 7. The lower-blade sensor 12 may measure or determine e.g. the angle or tilt of the lower blade 7. Furthermore, the lower-blade sensor 12 may measure or determine e.g. the pressing force of the lower blade 7. The pressing force of the lower blade 7 may also be determined from the position of the drive actuator or drive actuators and/or control signals entered to them.

The road maintenance vehicle may also include one or more vehicle sensors 13. The vehicle sensor may measure or determine e.g. the tilt of the vehicle or some other required variable. The sensor or sensors may be standard equipment in the road maintenance vehicle. On the other hand, the sensor or sensors may also be added as retrofit, in case there are no sensors, in case there is no required data available from the standard sensor or sensors, or in case of wanting more accurate and/or better quality data than are already available.

The data of the sensors are conveyed to the control unit 9 of the road maintenance actuators. Based on the data provided by the sensors, the control unit 9 of the road maintenance actuators is able to control the road maintenance actuators accurately to the desired set position.

Designation 14 shows an electronic control unit (ECU) of the road maintenance vehicle. It is also possible to connect the electronic control unit 14 to the control unit 9 of the road maintenance actuators.

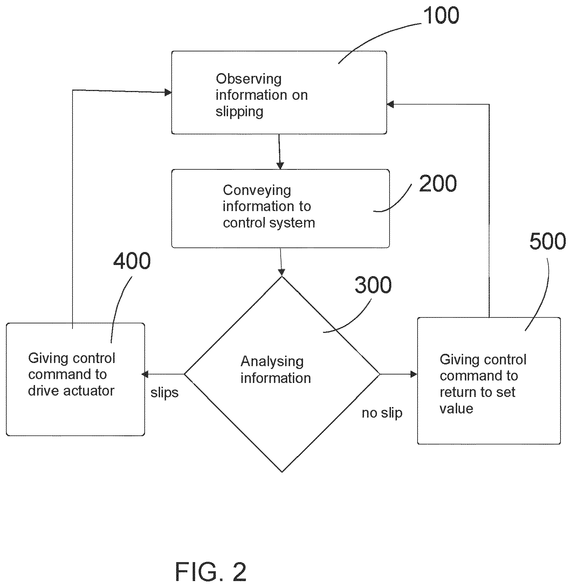

Figure 2 shows a solution for controlling the operations of a road maintenance vehicle. Block 100 describes observing and monitoring slipping of a driving wheel of the road maintenance vehicle in relation to the surface being worked. The slipping of the driving wheel, i.e. wheel spin, may be observed e.g. such that the actual speed of the vehicle is measured or determined by means of a radar or a GPS system. Additionally, the internal speed data of the vehicle, i.e. the speed that the vehicle power transmission should be able to output in accordance to the vehicle system, is determined. If this internal speed data is higher than the actual speed of the vehicle, it may be deducted that at least one driving wheel spins. On the other hand, the slipping of a driving wheel may be observed by e.g. monitoring speed differences between the wheels and, when the speed difference of the wheels exceeds a specific value, it may be deducted that at least one driving wheel spins.

A feature of observing the slipping of a driving wheel may be standard equipment in a road maintenance vehicle. Such information is thus available in the electronic control unit 14 of the road maintenance vehicle. In this case, the simplest solution for controlling the road maintenance actuators is to obtain the existing information from the electronic control unit 14 of the road maintenance vehicle and to utilise the existing information in the control of the road maintenance actuators.

In block 200, information on the slipping of the driving wheel is conveyed to the control system controlling the operations of the road maintenance vehicle. The information is thus conveyed to the control unit 9 of road maintenance actuators. In the simplest way for the control system, the information is thus obtained to the control unit 9 of the road maintenance as bus data from the electronic control unit 14 of the road maintenance vehicle.

In block 300, the information on the slipping of the driving wheel is analysed. The outcome of the analysis thus is that the driving wheel either spins or does no spin, and two different operation instructions are given for it.

If the driving wheel spins, the next operations are shown in block 400. When the driving wheel spins, the road maintenance actuator is controlled by giving a control command to the drive actuator.

According to an embodiment, as a response to the observation on the slipping of the driving wheel, the control system controlling the operations of the road maintenance vehicle decreases the slowing effect of a blade or plough of the road maintenance vehicle to the motion of the road maintenance vehicle. The slowing effect on the motion of the road maintenance vehicle may be decreased e.g. such that the pressing force of the blade or plough is reduced. Another way of action may be to change the work position of the blade or plough e.g. by altering the blade angle or delivery angle. The blade or plough of the road maintenance vehicle has a specific set work position and, when decreasing the slowing effect of the blade or plough of the road maintenance vehicle to the motion of the road maintenance vehicle, the blade or plough is deflected from the set work position.

The controllable or adjustable blade or plough may be one or more of e.g. the following: a front plough 5, a side plough 6 and a lower blade 7. In the control system, it may also be determined in which order the slowing effect on the motion is being reduced, i.e., which blade or plough is controlled first and which one after that. The user of the road maintenance vehicle may enter the control system instructions on which order to automatically control the different road maintenance actuators. Furthermore, the control may be applied to the road maintenance actuator only partially, i.e., if e.g. the pressing force of the lower blade 7 is first reduced, it may be determined that the force is reduced only partially and, if this reduction is not enough, e.g. the delivery angle of the side plough 6 is then controlled and so on until grip is again reached.

To decrease the slowing effect on the motion of the road maintenance vehicle the pressing force of the lower blade 7 is reduced. Additionally, the work position of the lower blade 7 can be changed. These measures may also be performed in a desired order and/or both partially.

When adjusting the pressing force of the blade or plough, e.g. the length of the press cylinder is not changed. The pressing force is thus be adjusted without moving the blade or plough, that is, without lifting or lowering the blade or plough. Then, e.g. the hydraulic pressure of a hydraulic press cylinder is adjusted. The pressing force of the press cylinder may e.g. decreased by leaking the pressure in the cylinder partially or totally to a hydraulic tank. There may be one or more press cylinders per blade or plough and, in the case of several press cylinders, the pressing force of one or more press cylinders is adjusted.

According to an embodiment, in block 400, when the driving wheel slips, in addition to or instead of decreasing the slowing effect of the blade or plough of the road maintenance vehicle on the motion of the road maintenance vehicle, the scattering amount of the scatterer 15 is adjusted. If the driving wheel slips, the scattering amount may be decreased or the scattering of the anti-slip material from the scatterer may even be stopped totally. This prevents the scattering of too much anti-slip material to one place.

If the scattering amount of the anti-slip material is dependent on the speed of the road maintenance vehicle such that the scattering amount is larger with higher speed, when the driving wheel slips, the control system thus tries to control the scattering amount too large in relation to the actual speed. The solution disclosed here may compensate such an error when the scattering amount is decreased when the driving wheel slips.

On the other hand, such an embodiment is also possible that the slipping of the driving wheel is interpreted as a situation where the surface is very slippery. In that case, the scatterer 15 may even be controlled to increase the scattering amount in order to be able to prevent slipperiness efficiently.

If the driving wheel does not spin, the next operations are shown in block 500. When it is observed that the driving wheel does not spin, the drive actuator or drive actuators are controlled back towards their set values. For example, the blade or plough of the road maintenance vehicle is controlled back towards the set work position. Naturally, if the blade or plough is already in the set or desired position, this control is not required. The scattering amount of the scatterer is controlled similarly towards the set value.

Both block 400 and block 500 direct back to block 100. This means that the process of Figure 2 is continuous. Therefore, the slipping of a driving wheel is monitored all the time and, based on observations, required measures are performed.

For example, three different pressing forces may be selected for the lower blade 7, i.e. heavy press, moderate press and light press. If the set work position i.e. set value is heavy press, then in case of the driving wheel slipping, the work position of the lower blade may be first changed to moderate press. If the grip then returns, the work position may be returned to heavy press or at least the press from moderate press may be increased towards heavy press. If the grip does not return, the work position of the lower blade may be then changed to light press. If the grip does not return even now, it is then possible to reduce the work position of the lower blade even further, if desired, or some other reducing measure may be then performed. When the grip finally returns, the work position may first be returned to light press. If the grip remains, the work position may be returned to moderate press and, if grip remains even then, the work position may be returned to heavy press, i.e. it is possible to return to the original set value.

If the set work position i.e. set value is moderate press, then in case of the driving wheel slipping, the work position of the lower blade may be first changed to light press. If the grip then returns, the work position may be returned to moderate press or at least the press from light press may be increased towards moderate press. When the set press i.e. set value is moderate press, the in case the grip returning, the work position is not however changed to heavier than moderate press without changing the desired work position setting. When the grip returns, the aim is thus particularly to return to the desired set value.

In the above examples, it was described that the work position of the road maintenance actuator is changed stepwise. In that case, it is possible to determine a delay in the process after changing the work position, during which, it is monitored if the change results in a desired effect. The control of the road maintenance actuator may also be constituted with so quick a cycle and so small changes that the change and the adjustment are practically continuous. This mode of control is also called stepless control. In such a way, the work position of the road maintenance actuator remains as close as possible to the set work position at all times.

In the simplest way, information on the slipping of a driving wheel may be an on/off information. The on/off information may be brought to the control unit 9 either as bus data from the electronic control unit 14 of the road maintenance vehicle or then from a separate system monitoring the slipping of a driving wheel. The on/off information may be e.g. a voltage signal such that the connector is either live or dead depending on the driving wheel slipping or not.

On the other hand, the information of the slipping of the driving wheel may also include information on quantity, i.e. for example, if the wheel slips only a little or if the grip is almost totally lost i.e. the wheel slips a lot. The quantity information may also be brought to the control unit 9 either as bus data from the electronic control unit 14 of the road maintenance vehicle or then from a separate system monitoring the slipping of a driving wheel. If desired, it is also possible to consider the quantity information, i.e., when slip is minor, it is possible to control the road maintenance actuator reduce only a little and, when slip is major, to control the road maintenance actuator to reduce more. Similarly, the adjustment of the scattering amount of the scatterer may depend on the amount of slipping. Then, the amount of the slipping of the driving wheel of the road maintenance vehicle is determined and the intensity of the control of the road maintenance actuator is dependent on the amount of slipping.

A computer program product in the control unit 9 comprises computer-readable program code which is configured to implement the operations of the disclosed road maintenance vehicle or the steps of the method which carries out the functions as the program code is being run by a processor. The control unit 9 comprises processing means or a processor. The control unit 9 may comprise memory in which information has been collected and stored as well as is being collected and stored. The processing means may be configured to carry out at least part of the process steps and/or operations disclosed in this specification. In an embodiment, the processing means may be adapted to receive and send information and commands. The processing means may comprise e.g. a programmable logic and/or a programmable microprocessor. The processing means may form the control unit 9 or a part thereof.

An embodiment comprises a computer program comprising program code which, when executed on a computer, executes operations according to any of the embodiments described above. The computer program may be included in a computer-readable storage medium, for instance in a non-volatile memory.

An embodiment comprises a computer program product comprising a computer program according to an embodiment for executing functions according to any of the embodiments described above.

In an embodiment, the apparatus comprises processing means configured to execute functions described in an embodiment. The processing means may serve as a computer for executing the program code. The processing means may comprise at least one processor, memory and program platform capable of executing the program code.

The embodiments may be implemented as a computer process that is defined by a computer program. The computer program may be in source code format, object code format or an intermediate format, and the computer program may be stored on a storage medium that may be any piece or apparatus that is capable of storing the computer program. For instance, a computer program may be stored on a computer program distribution medium that may be read by a computer or processor. The computer program distribution medium may comprise a storage medium, computer memory, read-only memory (ROM), electric carrier wave, telecommunications signal, and software distribution package, for instance.

In an embodiment, a computer program product may be stored on a computer-readable media and executable by a processor, and the computer program product may comprise computer-readable program code. This type of a computer program product may be configured to execute at least some of the steps in the method described above, when the program code is run by a processor.

Those skilled in the art will find it obvious that, as technology advances, the basic idea of the invention may be implemented in many different ways. The invention and its embodiments are thus not restricted to the examples described above but may vary within the scope of the claims.

## Claims

1. A method for controlling operations of a road maintenance vehicle, the method comprising monitoring (100) the slipping of a driving wheel of the road maintenance vehicle in relation to the surface being worked,
conveying (200) information on the slipping of the driving wheel to a control system controlling the operations of the road maintenance vehicle, and
as a response to the information on the slipping of the driving wheel, the control system decreases the slowing effect of a blade (7) or plough (5, 6) of the road maintenance vehicle to the motion of the road maintenance vehicle
**characterized in that**, to decrease the slowing effect, a pressing force of the blade (7) or plough (5, 6) to the surface being worked is adjusted without changing a height position of the blade or plough.

2. A method according to claim 1, wherein the pressing force has a specific set value and when decreasing the slowing effect of the blade (7) or plough (5, 6) of the road maintenance vehicle on the motion of the road maintenance vehicle, pressing force is reduced and, as a response to the information on the end of the slipping of the driving wheel, the control system increases the pressing force towards the set value.

3. A method according to claim 1 or 2, wherein the blade (7) or plough (5, 6) of the road maintenance vehicle has a specific set work position being a blade angle and, when decreasing the slowing effect of the blade or plough of the road maintenance vehicle on the motion of the road maintenance vehicle, the blade (7) or plough (5, 6) is deflected from the set work position and, as a response to the information on the end of the slipping of the driving wheel, the control system controls the blade or plough of the road maintenance vehicle back towards the set work position.

4. A method according to any of the preceding claims, wherein the controllable blade (7) or plough (5, 6) of the road maintenance vehicle is at least a lower blade of the road maintenance vehicle.

5. A method according to any of the preceding claims, wherein, as a response to the information on the slipping of the driving wheel, the control system adjusts the scattering amount of a scatterer (15).

6. A method according to any of the preceding claims, wherein the information of the slipping of the driving wheel is conveyed to the control system as bus data from an electronic control unit (14) of the road maintenance vehicle.

7. A method according to any of the preceding claims, comprising determining an amount of the slipping of the driving wheel of the road maintenance vehicle, wherein the intensity of the control of a road maintenance actuator is dependent on the amount of slipping.

8. A control system for controlling operations of a road maintenance vehicle, wherein the control system comprises a control unit (9) which is configured to receive information on slipping of a driving wheel of the road maintenance vehicle in relation to a surface being worked,
and which control unit (9) is configured, as a response to the information on the slipping of the driving wheel, to decrease the slowing effect of a blade (7) or plough (5, 6) of the road maintenance vehicle to the motion of the road maintenance vehicle,
**characterized in that**, to decrease the slowing effect, the control unit (9) is configured to automatically adjust a pressing force of the blade (7) or plough (5, 6) to the surface being worked without changing a height position of the blade (7) or plough (5, 6).

9. A control system according to claim 8, wherein the pressing force has a specific set value and, when decreasing the slowing effect of the blade (7) or plough (5, 6) of the road maintenance vehicle on the motion of the road maintenance vehicle, the control unit (9) is configured to send a control command to reduce pressing force, the control unit (9) is configured to receive information on the end of the slipping of the driving wheel of the road maintenance vehicle, and the control unit (9) is configured, as a response to the information on the end of the slipping of the driving wheel, to send a control command to increase the pressing force towards the set value.

10. A control system according to claim 8 or 9, wherein the blade (7) or plough (5, 6) of the road maintenance vehicle has a specific set work position being a blade angle and, when decreasing the slowing effect of the blade or plough of the road maintenance vehicle on the motion of the road maintenance vehicle, the control unit (9) is configured to send a control command to deflect the blade (7) or plough (5, 6) from the set work position, the control unit (9) is configured to receive information on the end of the slipping of the driving wheel and, as a response to the information on the end of the slipping of the driving wheel, the control unit (9) is configured to send a control command to control the blade (7) or plough (5, 6) of the road maintenance vehicle back towards the set work position.

11. A control system according to any one of claims 8-10, wherein the controllable blade (7) or plough (5, 6) of the road maintenance vehicle is at least a lower blade of the road maintenance vehicle.

12. A control system according to any one of claims 8-11, wherein the control unit (9) is configured, as a response to the information on the slipping of the driving wheel, to send a control command to adjust scattering amount of a scatterer (15).

13. A road maintenance vehicle, which comprises a blade (7) or a plough (5,6), means for monitoring the slipping of a driving wheel of the road maintenance vehicle in relation to a surface being worked and a control system according to any one of claims 8-12.

14. A road maintenance vehicle according to claim 13, which is a lorry (1) provided with road maintenance actuators.

15. A computer program product, which computer program product is stored on computer-readable media and executable by a processor, and which computer program product comprises a computer-readable program code that is configured to control the control system of a road maintenance vehicle according to any one of claims 13 or 14 to perform the steps of the method according to any one of claims 1-7, when the program code is run in a processor of the control system.

## Patentansprüche

1. Verfahren zur Steuerung des Betriebs eines Straßeninstandhaltungsfahrzeugs, wobei das Verfahren Folgendes umfasst: Überwachen (100) des Schlupfs eines Antriebsrads des Straßeninstandhaltungsfahrzeugs in Bezug auf die zu bearbeitende Oberfläche,
Übermitteln (200) von Informationen über den Schlupf des Antriebsrads an ein Steuerungssystem, das den Betrieb des Straßeninstandhaltungsfahrzeugs steuert; und
Verringern des Verlangsamungseffekts eines Räumschilds (7) oder eines Pflugs (5, 6) des Straßeninstandhaltungsfahrzeugs auf die Bewegung des Straßeninstandhaltungsfahrzeugs durch das Steuerungssystem als Reaktion auf die Informationen über den Schlupf des Antriebsrads, **dadurch gekennzeichnet, dass** zum Verringern des Verlangsamungseffekts eine Anpresskraft des Räumschilds (7) oder des Pflugs (5, 6) auf die zu bearbeitende Oberfläche angepasst wird, ohne eine Höhenposition des Räumschilds oder Pflugs zu ändern.

2. Verfahren nach Anspruch 1, wobei die Anpresskraft einen bestimmten Sollwert aufweist und beim Verringern des Verlangsamungseffekts des Räumschilds (7) oder Pflugs (5, 6) des Straßeninstandhaltungsfahrzeugs auf die Bewegung des Straßeninstandhaltungsfahrzeugs die Anpresskraft verringert wird und das Steuerungssystem als Reaktion auf die Informationen über das Ende des Schlupfs des Antriebsrads die Anpresskraft in Richtung des Sollwerts erhöht.

3. Verfahren nach Anspruch 1 oder 2, wobei das Räumschild (7) oder der Pflug (5, 6) des Straßeninstandhaltungsfahrzeugs eine bestimmte eingestellte Arbeitsposition aufweist, die ein Räumschildwinkel ist, und beim Verringern des Verlangsamungseffekts des Räumschilds oder Pflugs des Straßeninstandhaltungsfahrzeugs auf die Bewegung des Straßeninstandhaltungsfahrzeugs das Räumschild (7) oder der Pflug (5, 6) von der eingestellten Arbeitsposition ausgelenkt wird und das Steuerungssystem als Reaktion auf die Informationen über das Ende des Schlupfs des Antriebsrads das Räumschild oder den Pflug des Straßeninstandhaltungsfahrzeugs zurück in Richtung der eingestellten Arbeitsposition steuert.

4. Verfahren nach einem der vorstehenden Ansprüche, wobei das steuerbare Räumschild (7) oder der steuerbare Pflug (5, 6) des Straßeninstandhaltungsfahrzeugs mindestens ein unteres Räumschild des Straßeninstandhaltungsfahrzeugs ist.

5. Verfahren nach einem der vorstehenden Ansprüche, wobei das Steuerungssystem als Reaktion auf die Informationen über den Schlupf des Antriebsrads die Streumenge eines Streuers (15) anpasst.

6. Verfahren nach einem der vorstehenden Ansprüche, wobei die Informationen über den Schlupf des Antriebsrads dem Steuerungssystem als Bus-Daten von einer elektronischen Steuereinheit (14) des Straßeninstandhaltungsfahrzeugs übermittelt werden.

7. Verfahren nach einem der vorstehenden Ansprüche, umfassend das Bestimmen eines Ausmaßes des Schlupfs des Antriebsrads des Straßeninstandhaltungsfahrzeugs, wobei die Intensität der Steuerung eines Arbeitsaggregats zur Straßeninstandhaltung von dem Ausmaß des Schlupfs abhängig ist.

8. Steuerungssystem zur Steuerung des Betriebs eines Straßeninstandhaltungsfahrzeugs, wobei das Steuerungssystem eine Steuereinheit (9) umfasst, die ausgebildet ist, um Informationen über Schlupf eines Antriebsrads des Straßeninstandhaltungsfahrzeugs in Bezug auf eine zu bearbeitende Oberfläche zu empfangen,
und wobei die Steuereinheit (9) ausgebildet ist, um als Reaktion auf die Informationen über den Schlupf des Antriebsrads den Verlangsamungseffekt eines Räumschilds (7) oder Pflugs (5, 6) des Straßeninstandhaltungsfahrzeugs auf die Bewegung des Straßeninstandhaltungsfahrzeugs zu verringern,
**dadurch gekennzeichnet, dass** die Steuereinheit (9) zum Verringern des Verlangsamungseffekts ausgebildet ist, um automatisch eine Anpresskraft des Räumschilds (7) oder Pflugs (5, 6) auf die zu bearbeitende Oberfläche anzupassen, ohne eine Höhenposition des Räumschilds (7) oder Pflugs (5, 6) zu ändern.

9. Steuerungssystem nach Anspruch 8, wobei die Anpresskraft einen bestimmten Sollwert aufweist und die Steuereinheit (9) beim Verringern des Verlangsamungseffekts des Räumschilds (7) oder Pflugs (5, 6) des Straßeninstandhaltungsfahrzeugs auf die Bewegung des Straßeninstandhaltungsfahrzeugs ausgebildet ist, um einen Steuerbefehl zum Verringern der Anpresskraft zu senden, die Steuereinheit (9) ausgebildet ist, um Informationen über das Ende des Schlupfs des Antriebsrads des Straßeninstandhaltungsfahrzeugs zu empfangen, und die Steuereinheit (9) als Reaktion auf die Informationen über das Ende des Schlupfs des Antriebsrads ausgebildet ist, um einen Steuerbefehl zum Erhöhen der Anpresskraft in Richtung des Sollwerts zu senden.

10. Steuerungssystem nach Anspruch 8 oder 9, wobei das Räumschild (7) oder der Pflug (5, 6) des Straßeninstandhaltungsfahrzeugs eine bestimmte eingestellte Arbeitsposition aufweist, die ein Räumschildwinkel ist, und
die Steuereinheit (9) beim Verringern des Verlangsamungseffekts des Räumschilds oder Pflugs des Straßeninstandhaltungsfahrzeugs auf die Bewegung des Straßeninstandhaltungsfahrzeugs ausgebildet ist, um einen Steuerbefehl zum Auslenken des Räumschilds (7) oder Pflugs (5, 6) von der eingestellten Arbeitsposition zu senden, die Steuereinheit (9) ausgebildet ist, um Informationen über das Ende des Schlupfs des Antriebsrads zu empfangen, und die Steuereinheit (9) als Reaktion auf die Informationen über das Ende des Schlupfs des Antriebsrads ausgebildet ist, um einen Steuerbefehl zum Steuern des Räumschilds (7) oder Pflugs (5, 6) des Straßeninstandhaltungsfahrzeugs zurück in Richtung der eingestellten Arbeitsposition zu senden.

11. Steuerungssystem nach einem der Ansprüche 8-10, wobei das steuerbare Räumschild (7) oder der steuerbare Pflug (5, 6) des Straßeninstandhaltungsfahrzeugs mindestens ein unteres Räumschild des Straßeninstandhaltungsfahrzeugs ist.

12. Steuerungssystem nach einem der Ansprüche 8-11, wobei die Steuereinheit (9) ausgebildet ist, um als Reaktion auf die Informationen über den Schlupf des Antriebsrads einen Steuerbefehl zum Anpassen der Streumenge eines Streuers (15) zu senden.

13. Straßeninstandhaltungsfahrzeug, das ein Räumschild (7) oder einen Pflug (5,6), Mittel zum Überwachen des Schlupfs eines Antriebsrads des Straßeninstandhaltungsfahrzeugs in Bezug auf eine zu bearbeitende Oberfläche und ein Steuerungssystem nach einem der Ansprüche 8-12 umfasst.

14. Straßeninstandhaltungsfahrzeug nach Anspruch 13, das ein Lastkraftwagen (1) ist, der mit Arbeitsaggregaten zur Straßeninstandhaltung ausgestattet ist.

15. Computerprogrammprodukt, wobei das Computerprogrammprodukt auf computerlesbaren Medien gespeichert und durch einen Prozessor ausführbar ist und wobei das Computerprogrammprodukt einen computerlesbaren Programmcode umfasst, der ausgebildet ist, um das Steuerungssystem eines Straßeninstandhaltungsfahrzeugs nach einem der Ansprüche 13 oder 14 zu steuern, um die Schritte des Verfahrens nach einem der Ansprüche 1-7 auszuführen, wenn der Programmcode in einem Prozessor des Steuerungssystems läuft.

## Revendications

1. Procédé de commande des opérations d'un véhicule d'entretien routier, le procédé comprenant la surveillance (100) du patinage d'une roue motrice du véhicule d'entretien routier par rapport à la surface travaillée,
la transmission (200) d'informations sur le patinage de la roue motrice à un système de commande commandant les opérations du véhicule d'entretien routier, et
en réponse aux informations sur le patinage de la roue motrice, le système de commande diminue l'effet de ralentissement d'une lame (7) ou d'un chasse-neige (5, 6) du véhicule d'entretien routier sur le mouvement du véhicule d'entretien routier,
**caractérisé en ce que**, pour diminuer l'effet de ralentissement, une force d'appui de la lame (7) ou du chasse-neige (5, 6) sur la surface travaillée est ajustée sans modifier une position en hauteur de la lame ou du chasse-neige.

2. Procédé selon la revendication 1, dans lequel la force d'appui présente une valeur de consigne spécifique et, lors de la diminution de l'effet de ralentissement de la lame (7) ou du chasse-neige (5, 6) du véhicule d'entretien routier sur le mouvement du véhicule d'entretien routier, la force d'appui est réduite et, en réponse aux informations sur la fin du patinage de la roue motrice, le système de commande augmente la force d'appui vers la valeur de consigne.

3. Procédé selon la revendication 1 ou la revendication 2, dans lequel la lame (7) ou le chasse-neige (5, 6) du véhicule d'entretien routier présente une position de travail de consigne spécifique étant un angle de lame et,
lors de la diminution de l'effet de ralentissement de la lame ou du chasse-neige du véhicule d'entretien routier sur le mouvement du véhicule d'entretien routier, la lame (7) ou le chasse-neige (5, 6) est dévié(e) de la position de travail de consigne et, en réponse aux informations sur la fin du patinage de la roue motrice, le système de commande commande la lame ou le chasse-neige du véhicule d'entretien routier de nouveau vers la position de travail de consigne.

4. Procédé selon l'une quelconque des revendications précédentes, dans lequel la lame (7) ou le chasse-neige (5, 6) pouvant être commandé(e) du véhicule d'entretien routier est au moins une lame inférieure du véhicule d'entretien routier.

5. Procédé selon l'une quelconque des revendications précédentes, dans lequel, en réponse aux informations sur le patinage de la roue motrice, le système de commande ajuste la quantité d'épandage d'un épandeur (15).

6. Procédé selon l'une quelconque des revendications précédentes, dans lequel les informations sur le patinage de la roue motrice sont transmises au système de commande en tant que données de bus provenant d'une unité (14) de commande électronique du véhicule d'entretien routier.

7. Procédé selon l'une quelconque des revendications précédentes, comprenant la détermination d'une quantité du patinage de la roue motrice du véhicule d'entretien routier, dans lequel l'intensité de la commande d'un actionneur d'entretien routier dépend de la quantité de patinage.

8. Système de commande pour commander des opérations d'un véhicule d'entretien routier, dans lequel le système de commande comprend une unité de commande (9) qui est configurée pour recevoir des informations sur le patinage d'une roue motrice du véhicule d'entretien routier par rapport à une surface travaillée,
et ladite unité de commande (9) est configurée, en réponse aux informations sur le patinage de la roue motrice, pour diminuer l'effet de ralentissement d'une lame (7) ou d'un chasse-neige (5, 6) du véhicule d'entretien routier sur le mouvement du véhicule d'entretien routier,
**caractérisé en ce que**, pour diminuer l'effet de ralentissement, l'unité de commande (9) est configurée pour ajuster automatiquement une force d'appui de la lame (7) ou du chasse-neige (5, 6) sur la surface travaillée sans modifier une position en hauteur de la lame (7) ou du chasse-neige (5, 6).

9. Système de commande selon la revendication 8, dans lequel la force d'appui présente une valeur de consigne spécifique et, lors de la diminution de l'effet de ralentissement de la lame (7) ou du chasse-neige (5, 6) du véhicule d'entretien routier sur le mouvement du véhicule d'entretien routier, l'unité de commande (9) est configurée pour envoyer une instruction de commande pour réduire la force d'appui, l'unité de commande (9) est configurée pour recevoir des informations sur la fin du patinage de la roue motrice du véhicule d'entretien routier, et l'unité de commande (9) est configurée, en réponse aux informations sur la fin du patinage de la roue motrice, pour envoyer une instruction de commande pour augmenter la force d'appui vers la valeur de consigne.

10. Système de commande selon la revendication 8 ou la revendication 9, dans lequel la lame (7) ou le chasse-neige (5, 6) du véhicule d'entretien routier présente une position de travail de consigne spécifique étant un angle de lame et,
lors de la diminution de l'effet de ralentissement de la lame ou du chasse-neige du véhicule d'entretien routier sur le mouvement du véhicule d'entretien routier, l'unité de commande (9) est configurée pour envoyer une instruction de commande pour dévier la lame (7) ou le chasse-neige (5, 6) de la position de travail de consigne, l'unité de commande (9) est configurée pour recevoir des informations sur la fin du patinage de la roue motrice et, en réponse aux informations sur la fin du patinage de la roue motrice, l'unité de commande (9) est configurée pour envoyer une instruction de commande pour commander la lame (7) ou le chasse-neige (5, 6) du véhicule d'entretien routier de nouveau vers la position de travail de consigne.

11. Système de commande selon l'une quelconque des revendications 8 à 10, dans lequel la lame (7) ou le chasse-neige (5, 6) pouvant être commandé(e) du véhicule d'entretien routier est au moins une lame inférieure du véhicule d'entretien routier.

12. Système de commande selon l'une quelconque des revendications 8 à 11, dans lequel l'unité de commande (9) est configurée, en réponse aux informations sur le patinage de la roue motrice, pour envoyer une instruction de commande pour ajuster la quantité d'épandage d'un épandeur (15).

13. Véhicule d'entretien routier, qui comprend une lame (7) ou un chasse-neige (5,6), des moyens pour surveiller le patinage d'une roue motrice du véhicule d'entretien routier par rapport à une surface travaillée et un système de commande selon l'une quelconque des revendications 8 à 12.

14. Véhicule d'entretien routier selon la revendication 13, qui est un camion (1) muni d'actionneurs d'entretien routier.

15. Produit de programme informatique, lequel produit de programme informatique est stocké sur un support lisible par ordinateur et pouvant être exécuté par un processeur, et lequel produit de programme informatique comprend un code de programme lisible par ordinateur qui est configuré pour commander le système de commande d'un véhicule d'entretien routier selon l'une quelconque des revendications 13 ou 14 afin de réaliser les étapes du procédé selon l'une quelconque des revendications 1 à 7, lorsque le code de programme est exécuté dans un processeur du système de commande.
